# EUROPEAN PATENT SPECIFICATION

(11) **EP 3 019 758 B1**
(45) Date of publication and mention of the grant of the patent: **24.10.2018**
(21) Application number: 14755154.3
(22) Date of filing: 11.07.2014
(51) Int. Cl.: F16B 37/12

(54) **GAS TURBINE COMBUSTION CHAMBER WITH REVERSIBLE FASTENING DEVICE FOR THERMOINSULATING TILES**
GASTURBINENBRENNKAMMER MIT REVERSIBLER BEFESTIGUNGSVORRICHTUNG FÜR WÄRMEDÄMMENDE FLIESEN
CHAMBRE DE COMBUSTION DE TURBINE À GAZ AYANT UN DISPOSITIF DE FIXATION RÉVERSIBLE POUR CARREAUX THERMOISOLANTS

(30) Priority: 12.07.2013 IT MI20131177
(43) Date of publication of application: 18.05.2016
(73) Proprietor: Ansaldo Energia S.p.A., Genova (IT)
(72) Inventor: PISTONE, Valerio, 16135 Genova (IT)
(74) Representative: Bernotti, Andrea
(86) International application number: PCT/IB2014/063045
(87) International publication number: WO 2015/004642

(56) References cited:
- EP-A1- 2 591 881
- WO-A1-2012/099212
- US-A- 2 662 260
- US-A- 4 040 151
- US-A1- 2003 106 393

## Description

### TECHNICAL FIELD

The present invention relates to a gas turbine combustion chamber with reversible fastening device for thermoinsulating tiles.

### BACKGROUND ART

As known, inspection, maintenance or repair operations involving bodies connected to each other by means of threaded coupling may have critical aspects under specific conditions, especially when the space available for operators is narrow. For example, if the screw breaks, often extracting the stump is difficult or even impossible and requires a hole to be made and new thread to restore the nut screw.

A case in which problems are particularly frequent associated with a threaded element breaking and being replaced is the one of gas turbine combustion chambers in energy production power plants.

A combustion chamber generally comprises a casing, for example toroidal or cylindrical in shape, covered internally by thermoinsulating tiles. The tiles are normally connected to the wall of the casing with screw fastening devices. The nut screw is carried out in a through hole directly in the wall of the casing and the screw is inserted (or extracted for disassembly) from the inside.

Although the screws are made of special alloys that are resistant to hot temperatures, over time they become fragile due to exposure to repeated thermal cycles involving considerable temperature variations. The screws may therefore break with given easiness when the tiles are to be removed due to regular maintenance or for replacing a damaged element.

In case of breaking, the broken part of the leg remains inside its seat in the casing of the combustion chamber. Often, this possibility forces the broken part to be removed by means of drilling and successive new thread and/or replacing any heli-coils present. The operations to be carried out are delicate, complex and in any event invasive and may cause further damage to the casing of the combustion chamber also when performed by highly qualified personnel.

Furthermore, even if the operations are carried out workmanlike and without inducing further damage, the fact is to be considered that often the dimensions of combustion chambers allow a single operator alone to operate from the inside. Restoration operations are therefore particularly lengthy, in addition to being laborious.

Screws breaking, which is a relatively frequent phenomenon during the disassembly of the tiles, therefore has a negative impact on the duration of the maintenance intervention times and requires prolonged machine downtimes, with a significant increase in costs.

EP 2 591 881 A1 discloses a reversible fastening device, which fixes a respective tiles to an inner face of the casing of a gas turbine combustion chamber. The reversible fastening device comprises a supporting body, fixed to an outer face of the casing and having a locking seat and an opening for access to the locking seat from the inside of the casing through a wall of the casing; a threaded bushing insertable inside the locking seat to receive a screw through the wall from the inside of the casing; and at least one locking member, for releasably locking the bushing inside the locking seat.

Another known fastening device is disclosed in US 2 662 260 A.

### DISCLOSURE OF INVENTION

It is therefore the object of the present invention to provide a gas turbine combustion chamber that allows the limitations described to be overcome.

According to the present invention, a gas turbine combustion chamber is provided as defined in claim 1.

### BRIEF DESCRIPTION OF THE DRAWINGS

The present invention shall now be described with reference to the accompanying drawings, which illustrate several non-limiting embodiment examples thereof, in which:
- figure 1 is a cross section of a combustion chamber of a gas turbine;
- figure 2 is a side view of a reversible fastening device in accordance with one embodiment of the present invention;
- figure 3 is a plan view from above of the reversible fastening device in figure 2;
- figure 4 is an exploded front view of the reversible fastening device in figure 2, sectioned along the path plane IV-IV in figure 3;
- figure 5 is an exploded side view of the reversible fastening device in figure 2, sectioned along the path plane V-V in figure 3 in a first configuration;
- figure 6 is a plan view from above, with parts removed for clarity, of the reversible fastening device in figure 2;
- figure 7 is a side view of the reversible fastening device in figure 2, sectioned along the path plane V-V in figure 3 in a second configuration;
- figure 8 is a plan view from above of a reversible fastening device in accordance with a different embodiment of the present invention;
- figure 9 is a front view of the reversible fastening device in figure 8, sectioned along the path plane IX-IX in figure 8;
- figure 10 is a side view of the reversible fastening device in figure 8, sectioned along the path plane X-X in figure 8;
- figure 11 is a plan view from above, with parts removed for clarity, of the reversible fastening device in figure 8; and
- figure 12 is a perspective view of a fastening device in accordance with a further embodiment of the present invention.

### BEST MODE FOR CARRYING OUT THE INVENTION

The invention will be described below with particular reference to fastening the thermoinsulating tiles to the inner wall of the casing of a combustion chamber of a gas turbine.

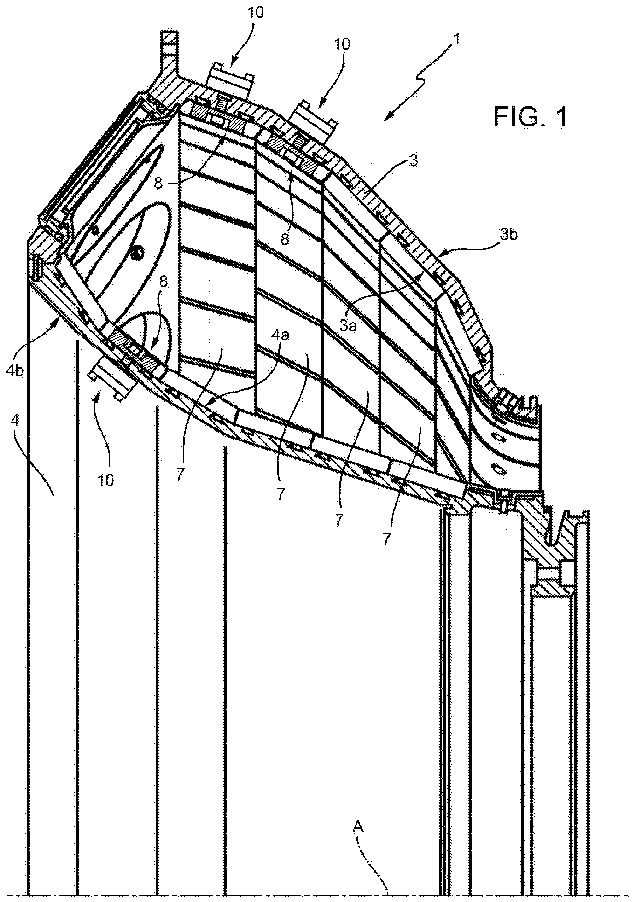

With reference to figure 1, a combustion chamber 1 of a gas turbine (not wholly shown) comprises a toroidal casing 2 extending about an axis A and having a first radially outer shell 3 defined by a doughnut-shaped wall, and a second radially inner shell 4 defined by a substantially truncated cone-shaped wall. The combustion chamber 1 is provided with a thermoinsulating covering which covers inner faces 3a, 4a of the first shell 3 and of the second shell 4, respectively, and comprises a plurality of thermoinsulating tiles 7. In one embodiment, the thermoinsulating tiles 7 are arranged in adjacent groups along circumferences about axis A of the combustion chamber 1.

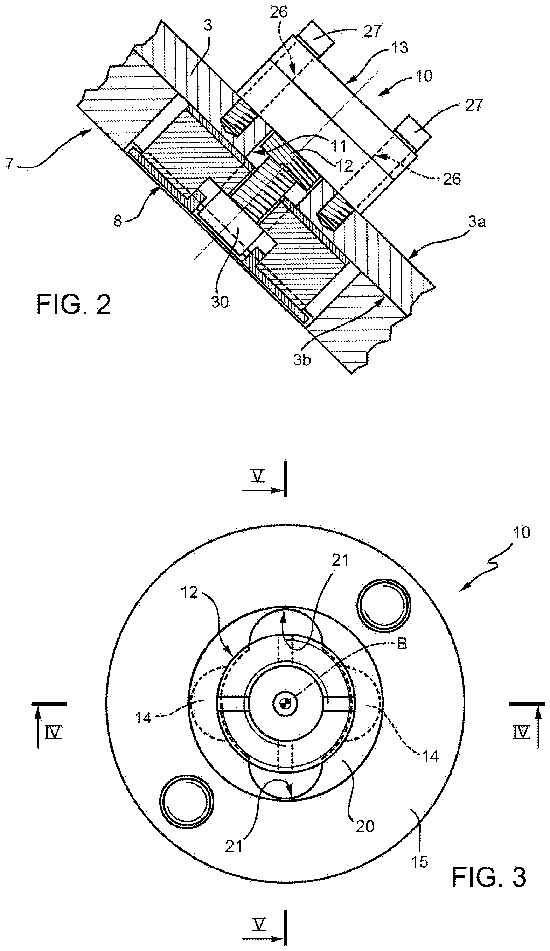

The thermoinsulating tiles 7 are mounted on circumferential guides (not shown) by means of connecting elements 8. The connecting elements 8 are shaped so as to couple to retaining portions of respective thermoinsulating tiles 7 and are connected to casing 2 by means of fastening devices 10 through respective through holes 11 obtained in the first shell 3 and in the second shell 4 (see also figure 2).

With reference to figures 3 to 7, the fastening device 10 in one embodiment of the invention comprises a bushing 12 and a supporting body 13. Bushing 12 is threaded internally and externally and is removably coupled to the supporting body 13. In one embodiment, the coupling between bushing 12 and the supporting body 13 is a bayonet connection.

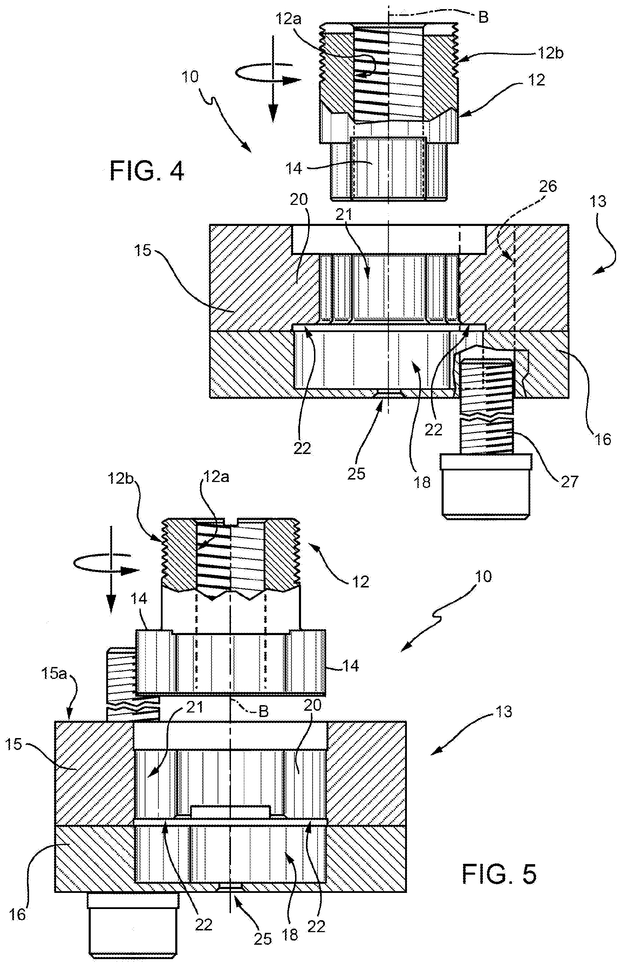

In particular, the inner thread 12a (figures 4, 5 and 7) allows a screw 30 (figure 2) to be introduced to lock a respective thermoinsulating tile 7.

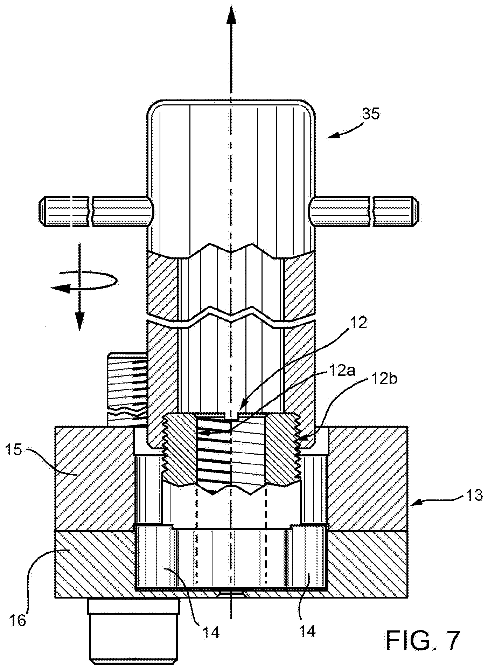

The outer thread 12b (figures 4, 5, and 7) is opposite to the inner thread 12a and allows the coupling of bushing 12 with an extraction tool 35 with corresponding thread (shown in figure 7, e.g. in the shape of a socket spanner).

In detail (figures 4 and 5), bushing 12 extends along an axis B, is substantially cylindrical in shape and is provided at one end with locking tabs 14 which radially extend with respect to axis B. In one embodiment, the locking tabs 14 are substantially circular or elliptical in shape.

The supporting body 13 is substantially cup-shaped and comprises an annular member 15 and a cover 16 defining together a locking seat 18 shaped to receive and axially lock bushing 12.

The annular member 15 extends about an axis, which coincides with axis B when the bushing is coupled to the supporting body 13. An edge 15a of the annular member 15 is intended in use to be coupled to an outer face 3b of the first shell 3 or to an outer face 4b of the second shell 4 of casing 2. The annular member 15 further comprises an inner baffle 20 which extends perpendicular to axis B and has an opening 21 for access to the locking seat 18. The profile of opening 21 is complementary to the profile of the end of bushing 12, to allow the insertion and extraction in axial direction.

The inner baffle 20 delimits the locking seat 18 on one side and in particular has recesses 22 which define a locking position for bushing 12. In greater detail, the recesses 22 have a complementary profile with respect to the locking tabs 14, so that the rotation of bushing 12 is prevented once the bushing is put in traction by means of a screw, as explained later.

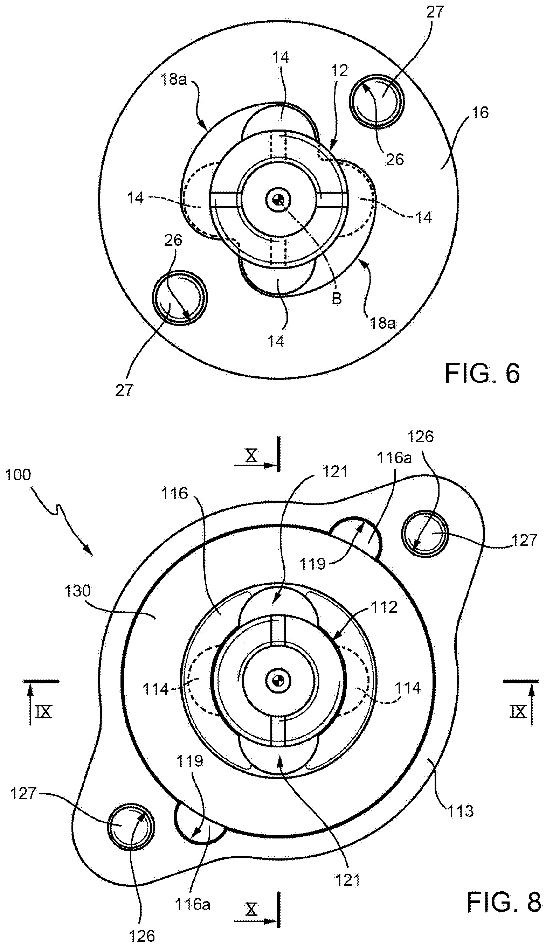

In one embodiment, cover 16 is arranged to close the annular member 15 and has a cavity which delimits the locking seat 18 one an opposite side to the side delimited by the inner baffle 20 of the annular member 15. As shown in figure 6, the portion of the locking seat 18 which is inside cover 16 has just as many lobes 18a as there are locking tabs 14 of bushing 12. The lobes 18a are shaped so as to allow a rotation of bushing 12 inside the locking seat 18 between an insertion and extraction position, in which the locking tabs 14 are aligned with opening 21 and the bushing is axially sliding, and a locking position (indicated with a broken line in figure 6), in which the locking tabs 14 are retained in a dead portion of the locking seat 18 and prevent the extraction of bushing 12. The locking position corresponds to the position in which the recesses 22 are arranged of the inner baffle 20 of the annular member 15. In one embodiment, the lobes 18a are shaped so as to prevent rotations of bushing 12 past the insertion and extraction position and the locking position. Furthermore, the portions of the locking seat 18 corresponding to the locking position are delimited by the inner baffle 20, by cover 16 and by the walls of the lobes 18a, and are dead. Furthermore, the dead portion of each lobe 18a is arranged so as to promote the insertion and extraction of bushing 12. In other words, bushing 12 is internally threaded (inner thread 12a, figures 4, 5 and 7) so that screwing a screw 30 (figure 2) inside bushing 12 causes bushing 12 to rotate from the insertion and extraction position to the locking position (that is toward the dead portion of each lobe 18a), and unscrewing screw 30 causes bushing 12 to rotate from the locking position to the insertion and extraction position (that is from the dead portions of the lobes 18a toward the access opening 21 to the locking seat 18). Vice versa, the outer thread 12b, which is opposite to the inner thread 12a, allows the extraction tool 35 to be tightened on bushing 12 and, by again acting in the tightening direction, a torque to be exerted to rotate bushing 12 from the locking position toward the insertion and extraction position. In particular, once the coupling is tightened on the outer thread 12b, the extraction tool 35 may advantageously be used to force the separation of bushing 12 from the supporting body 13 both in axial direction, and with a rotation toward the insertion and extraction position. The high temperatures in the combustion chamber 1 indeed promote the oxidization of the materials of bushing 12 and of the supporting body 13, which may join together. Separating bushing 12 from the supporting body 13 may be difficult in the absence of a simple and at the same time solid connection between bushing 12 and the extraction tool 35, to the point of making the removal of the parts to be replaced almost impossible.

A hole 25 on the bottom of cover 16 allows the inlet of cooling air from the outside.

Furthermore, holes 26 passing through the annular member 15 and cover 16 allow the supporting body 13 to be fastened to casing 2 of the combustion chamber 1 by means of screws 27, as shown in figure 2.

More precisely, the supporting body 13 is fastened to the outer face of the wall that defines one from the first shell 3 and the second shell 4 (for the sake of convenience, reference will be made hereinafter to the first shell 3, shown in figure 2), in position corresponding to one of the through holes 11. In addition to or in replacement of screw fastening the supporting body 13 as shown in figure 2, edge 15a of the annular member 15 may be welded to casing 2 of the combustion chamber 1.

Practically, the supporting body 13 may be arranged so that bushing 12 is accessible from the side of the fastening surface (that is of the inner surface of casing 2) opposite to the side where the locking seat 18 is. Furthermore, the releasable coupling between bushing 12 and the supporting body 13 allows bushing 12 to be quickly and simply replaced when required, for example when screw 30 breaks.

Bushing 12 may be easily introduced into the locking seat 18 in insertion and extraction position. As a result of how the inner thread of bushing 12 is made, tightening screw 30 tends to bring bushing 12 toward the locking position, thus avoiding accidental release. As a further tightening effect of screw 30 and of the action of the body that is fastened against the inner surface of casing 2 (that is of one of the connecting elements 8, in the embodiment described), bushing 12 is put in traction and the locking tabs 14 are received in the recesses 22 of the inner baffle 20, thus preventing further rotations.

When screw 30 is unscrewed, the locking tabs 14 are no longer tightened in the recesses 22 and bushing 12 may rotate toward the insertion and extraction position. Bushing 12 is equally free to rotate when screw 30 breaks.

At this point, the bushing may be easily extracted and replaced.

The operation for restoring an unserviceable threaded seat is therefore highly simplified due to the fastening device 10, and does not require any radical interventions (drilling and new thread) on the wall. Restoring the original conditions of the combustion chamber by replacing bushing 12 may be easily done by a single operator and also when little space is available.

Furthermore, the supporting body is fixed to an outer face of the casing 2 of the combustion chamber 1 and therefore is exposed to moderate thermal stresses.

Figures 8 to 11 show a different embodiment of the invention. In this case, the fastening device 100 comprises a bushing 112 and a supporting body 113.

Bushing 112 is threaded internally and externally and is removably bayonet-connected to the supporting body 113. Bushing 112 extends along an axis B', is substantially cylindrical in shape and is provided at one end with locking tabs 114 which radially extend with respect to axis B'. An inner thread 112a of bushing 112 is opposite to an outer thread 112b.

The supporting body 113 is cup-shaped and defines a locking seat 118 adapted to receive bushing 112.

The locking seat 118 is delimited on one side by a bottom wall of the supporting body 113 and, on the opposite side, by a plate, in particular a disk 116 accommodated in the supporting body 113. In greater detail, the supporting body 113 has an inner annual projection on which disk 116 rests, so as to remain separate from the bottom wall of the supporting body 113. Radial pins 116a accommodated in seats 119 of the supporting body 113 prevent the rotation of disk 116. Disk 116 has an opening 121 which conforms with the profile of the end of bushing 112 provided with tabs 114, to allow access to the locking seat 118.

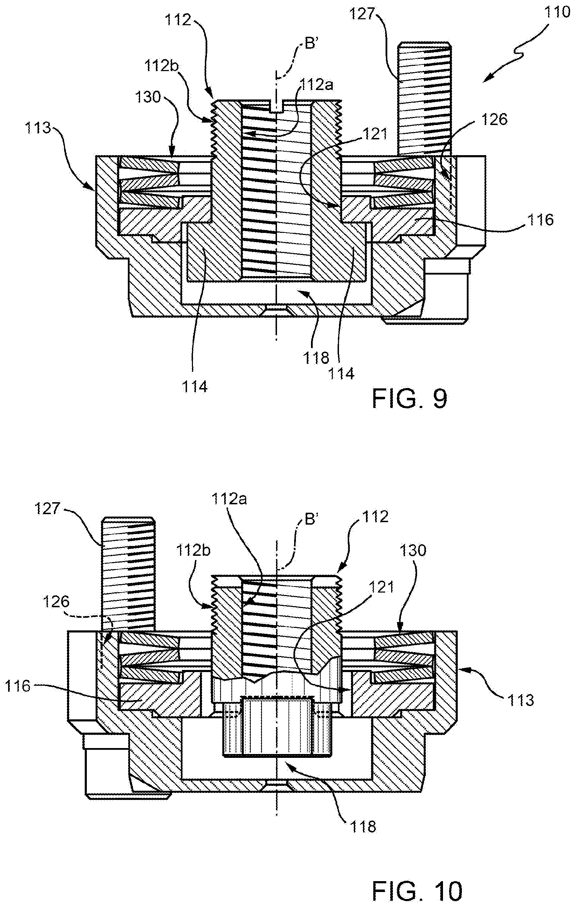

As shown in figure 9, the portion of the locking seat 118 defined in the bottom wall of the supporting body 113 has just as many lobes 118a as there are locking tabs 114 of bushing 112.

The lobes 118a are shaped so as to allow a rotation of bushing 112 inside the locking seat 118 between an insertion and extraction position, in which the locking tabs 114 are aligned with opening 121 and the bushing is axially sliding, and a locking position, in which the locking tabs 114 are retained in a dead portion of the locking seat 118 and prevent the extraction of bushing 112.

A pack of Belleville washers 130 is accommodated in the cavity of the supporting body 113, about bushing 112, in abutment against disk 116. The Belleville washers 130 allow the tension to be decreased on the fastening screw 130 and the thermal expansions of the combustion chamber to be compensated.

Through holes 126 allow the supporting body 113 to be fastened to casing 2 of the combustion chamber 1 by means of screws 127.

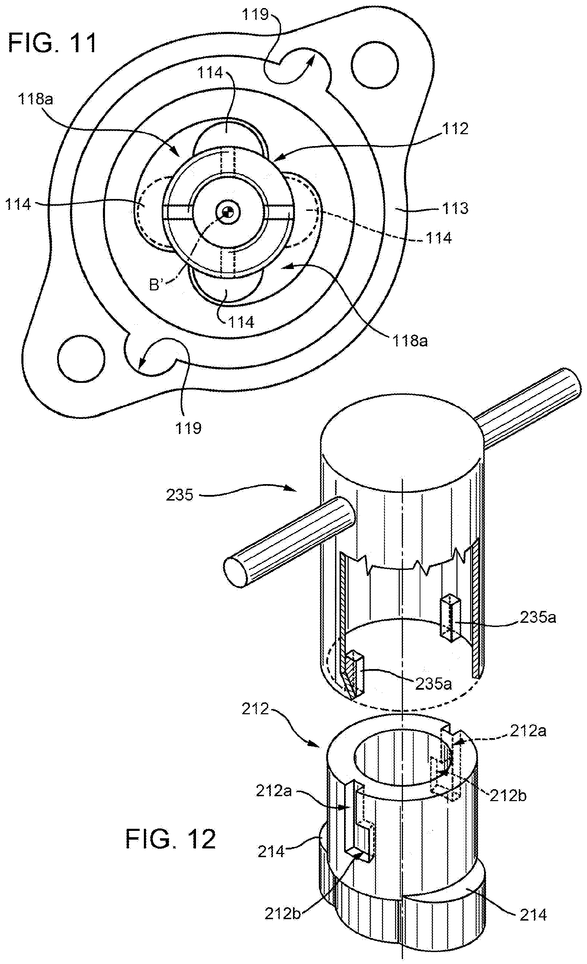

In one embodiment, shown in figure 12, a bushing 212 provided with locking tabs 214 stands out from bushing 12 in figures 2-7 for having longitudinal guides 212a on the outer surface (for example, two diametrically opposing), in place of the outer thread. The longitudinal guides 212a may be defined by respective grooves which extend from an edge of bushing 212 opposite to the locking tabs 214 toward the latter, and allow the sliding coupling with respective inner teeth 235a of an extraction tool 235 (e.g. in the shape of a socket spanner). In one embodiment, the longitudinal guides 212a have respective retaining seats 212b of sufficient axial dimension to receive a respective tooth 235a of the extraction tool 235. The retaining seats 212b extend laterally to the longitudinal guides 212a and the teeth 235a may be introduced by means of rotation, after the extraction tool 235 has been inserted up to the end of the longitudinal guides 212a. Furthermore, the retaining seats 212b are shaped so that once engaged, the axial sliding of the teeth 235a is prevented, to allow traction to be exerted on bushing 212. Advantageously, the retaining seats 212b are arranged with respect to the longitudinal guides 212a so as to be engaged by the teeth 235a when the extraction tool 235 is rotated to bring bushing 212 from the locking position to the insertion and extraction position.

Finally, it is apparent that modifications and variants may be made to the combustion chamber herein described without departing from the scope of the present invention, as defined in the appended claims.

Furthermore, the locking members could differ in number, e.g. three or four. In this case, the locking seat may advantageously comprise just as many lobes, each of which allows and limits the rotation of the bushing to an arc defined between the insertion and extraction position and the locking position.

## Claims

1. A gas turbine combustion chamber comprising a casing (2), a plurality of thermally insulating tiles (7) covering internally the casing (2) and at least one reversible fastening device (10), which fixes one of the respective tiles (7) to an inner face (3a, 4a) of the casing (2), the reversible fastening device comprising:
a supporting body (13; 113), fixed to an outer face (3b, 4b) of the casing (2) and having a locking seat (18; 118) and an opening (21; 121) for access to the locking seat (18; 118) from the inside of the casing (2) through a wall (3, 4) of the casing (2);
a threaded bushing (12; 112; 212) insertable inside the locking seat (18; 118) to receive a screw (30; 130) through the wall (3, 4) from the inside of the casing (2); and
at least one locking member (14; 114; 214), configured to releasably lock the bushing (12; 112; 212) inside the locking seat (18; 118);
**characterized in that** the locking member comprises a tab (14; 114; 214) extending radially from the bushing (12; 112; 212), and the locking seat (18; 118) has a dead portion communicating with the opening (21; 121) and configured to receive and axially retain the tab (14; 114; 214); wherein the bushing (12; 112; 212) is angularly movable, inside the locking seat (18; 118), between an insertion and extraction position, in which the tab (14; 114; 214) is aligned with the opening (21; 121) and the bushing (12; 112; 212) is axially movable, and a locking position, in which the tab (14; 114; 214) is retained inside the dead portion of the locking seat (18; 118).

2. A combustion chamber as claimed in Claim 1, wherein the bushing (12; 112; 212) and the locking seat (18; 118) are bayonet-connectable.

3. A combustion chamber as claimed in any one of the foregoing Claims, wherein the bushing (12; 112; 212) has an inner thread (12a) configured so that screwing the screw (30; 130) inside the bushing (12; 112; 212) causes the bushing (12; 112; 212) to rotate from the insertion and extraction position to the locking position, and unscrewing the screw (30; 130) causes the bushing (12; 112; 212) to rotate from the locking position to the insertion and extraction position.

4. A combustion chamber as claimed in Claim 3, wherein the bushing (12; 112; 212) comprises coupling elements (12b; 112b; 212a, 212b) for coupling to an extraction tool (35; 235).

5. A combustion chamber as claimed in Claim 4, wherein the coupling elements (12b; 112b; 212a, 212b) are configured to couple the bushing to the extraction tool (35; 235) so that it is possible, through the extraction tool (35; 235), to exert a traction and a torque on the bushing (12; 112; 212) to rotate the bushing (12; 112; 212) from the locking position toward the insertion and extraction position.

6. A combustion chamber as claimed in Claim 4 or 5, wherein the coupling elements (12b; 112b) comprise an outer thread (12b; 112b) opposite to the inner thread (12a; 112a) .

7. A combustion chamber as claimed in Claim 4, wherein the coupling elements (212a, 212b) comprise longitudinal guides (212a) on an outer surface and retaining seats (212b) extending laterally to the longitudinal guides (212a) and engageable by corresponding retaining elements (235a) of the extraction tool (235); the retaining seats (212b) being shaped so that once engaged, the axial sliding of the extraction tool (235) is locked with respect to the bushing (212).

8. A combustion chamber as claimed in any one of the foregoing Claims, wherein the locking seat (18) has recesses (22) which define the locking position of the bushing (12) and have a profile which is complementary to the tab (14), so that the rotation of the bushing (12) is prevented once the bushing (12) is put in traction by means of the screw (30).

9. A combustion chamber as claimed in any one of the foregoing Claims, wherein the supporting body (13; 113) is cup-shaped, and the bushing (12; 112; 212) housed inside the supporting body (13; 113) is accessible through a mouth of the supporting body (13; 113).

10. A combustion chamber as claimed in Claim 9, comprising a pack of Belleville washers (130) housed in the supporting body (113), about the bushing (112).

11. A combustion chamber as claimed in Claim 9 or 10, wherein the supporting body (113) comprises a bottom wall in which a first side of the locking seat (118) is defined; and a plate (116) where the opening (121) and a second side of the locking seat (118) are defined.

12. A combustion chamber as claimed in Claim 10 or 11, wherein the supporting body (13) comprises an annular member (15), in which a first side of the locking seat (18) and the opening (21) are defined, and a cover (16), in which a second side of the locking seat (18; 118) is defined, the cover (16) closing the annular member (15), on the opposite side to a bushing (12) insertion side.

## Patentansprüche

1. Gasturbinen-Brennkammer, die ein Gehäuse (2), mehrere wärmeisolierende Kacheln (7), die das Gehäuse (2) im Inneren bedecken, und wenigstens eine reversible Befestigungsvorrichtung (10), die eine der jeweiligen Kacheln (7) an einer Innenfläche (3a, 4a) des Gehäuses (2) befestigt, umfasst, wobei die reversible Befestigungsvorrichtung umfasst:
einen Stützkörper (13; 113), der an einer Außenfläche (3b, 4b) des Gehäuses (2) befestigt ist und einen Verriegelungssitz (18; 118) und eine Öffnung (21; 121) für den Zugang zu dem Verriegelungssitz (18; 118) von dem Inneren des Gehäuses (2) durch eine Wand (3, 4) des Gehäuses (2) aufweist;
eine Gewindebuchse (12; 112; 212), die in das Innere des Verriegelungssitzes (18; 118) einsetzbar ist, um eine Schraube (30; 130) aus dem Inneren des Gehäuses (2) durch die Wand (3, 4) aufzunehmen; und
wenigstens ein Verriegelungselement (14; 114; 214), das konfiguriert ist, die Buchse (12; 112; 212) innerhalb des Verriegelungssitzes (18; 118) lösbar zu verriegeln;
**dadurch gekennzeichnet, dass** das Verriegelungselement eine Zunge (14; 114; 214) umfasst, die sich radial von der Buchse (12; 112; 212) erstreckt, und der Verriegelungssitz (18; 118) einen Totabschnitt aufweist, der mit der Öffnung (21; 121) in Verbindung steht und konfiguriert ist, die Zunge (14; 114; 214) aufzunehmen und axial zu halten; wobei die Buchse (12; 112; 212) innerhalb des Verriegelungssitzes (18; 118) zwischen einer Einsetz- und Herausziehposition, an der die Zunge (14; 114; 214) auf die Öffnung (21; 121) ausgerichtet ist und die Buchse (12; 112; 212) axial beweglich ist, und einer Verriegelungsposition, an der die Zunge (14; 114; 214) innerhalb des Totabschnitts des Verriegelungssitzes (18; 118) gehalten ist, winkelig beweglich ist.

2. Brennkammer nach Anspruch 1, wobei die Buchse (12; 112; 212) und der Verriegelungssitz (18; 118) bajonettartig verbindbar sind.

3. Brennkammer nach einem der vorhergehenden Ansprüche, wobei die Buchse (12; 112; 212) ein Innengewinde (12a) aufweist, das konfiguriert ist, so dass das Schrauben der Schraube (30; 130) in die Buchse (12; 112; 212) veranlasst, dass sich die Buchse (12; 112; 212) von der Einsetz- und Herausziehposition zu der Verriegelungsposition dreht, während das Herausschrauben der Schraube (30; 130) veranlasst, dass sich die Buchse (12; 112; 212) von der Verriegelungsposition zu der Einsetz- und Herausziehposition dreht.

4. Brennkammer nach Anspruch 3, wobei die Buchse (12; 112; 212) die Kopplungselemente (12b; 112b; 212a, 212b) zum Koppeln an ein Herausziehwerkzeug (35; 235) umfasst.

5. Brennkammer nach Anspruch 4, wobei die Kopplungselemente (12b; 112b; 212a, 212b) konfiguriert sind, um die Buchse an das Herausziehwerkzeug (35; 235) zu koppeln, so dass es möglich ist, durch das Herausziehwerkzeug (35; 235) eine Zugkraft und ein Drehmoment auf die Buchse (12; 112; 212) auszuüben, um die Buchse (12; 112; 212) aus der Verriegelungsposition zu der Einsetz- und Herausziehposition zu drehen.

6. Brennkammer nach Anspruch 4 oder 5, wobei die Kopplungselemente (12b; 112b) ein Außengewinde (12b; 112b) umfassen, das zu dem Innengewinde (12a; 112a) entgegengesetzt ist.

7. Brennkammer nach Anspruch 4, wobei die Kopplungselemente (212a, 212b) Längsführungen (212a) auf einer Außenfläche und Haltesitze (212b), die sich seitlich zu den Längsführungen (212a) erstrecken und mit den entsprechenden Halteelementen (235a) des Herausziehwerkzeugs (235) in Eingriff gelangen können, umfassen; wobei die Haltesitze (212b) so geformt sind, dass, sobald sie in Eingriff gelangt sind, das axiale Gleiten des Herausziehwerkzeugs (235) bezüglich der Buchse (212) verriegelt ist.

8. Brennkammer nach einem der vorhergehenden Ansprüche, wobei der Verriegelungssitz (18) Aussparungen (22) aufweist, die die Verriegelungsposition der Buchse (12) definieren und ein Profil aufweisen, das zu der Zunge (14) komplementär ist, so dass die Drehung der Buchse (12) verhindert ist, sobald mittels der Schraube (30) auf die Buchse (12) eine Zugkraft ausgeübt wird.

9. Brennkammer nach einem der vorhergehenden Ansprüche, wobei der Stützkörper (13; 113) becherförmig ist und die Buchse (12; 112; 212), die innerhalb des Stützkörpers (13; 113) untergebracht ist, durch eine Öffnung des Stützkörpers (13; 113) zugänglich ist.

10. Brennkammer nach Anspruch 9, die einen Stapel Tellerfedern (130) umfasst, der in dem Stützkörper (113) um die Buchse (112) untergebracht ist.

11. Brennkammer nach Anspruch 9 oder 10, wobei der Stützkörper (113) eine Bodenwand, in der eine erste Seite des Verriegelungssitzes (118) definiert ist; und eine Platte (116), wo die Öffnung (121) und eine zweite Seite des Verriegelungssitzes (118) definiert sind, umfasst.

12. Brennkammer nach Anspruch 10 oder 11, wobei der Stützkörper (13) ein ringförmiges Element (15), in dem eine erste Seite des Verriegelungssitzes (18) und die Öffnung (21) definiert sind, und eine Abdeckung (16), in der eine zweite Seite des Verriegelungssitzes (18; 118) definiert ist, umfasst, wobei die Abdeckung (16) das Verriegelungselement (15) auf der der Einsetzseite der Buchse (12) gegenüberliegenden Seite verschließt.

## Revendications

1. Chambre de combustion de turbine à gaz comprenant un boîtier (2), une pluralité de carreaux thermiquement isolants (7) recouvrant l'intérieur du boîtier (2) et au moins un dispositif de fixation réversible (10) qui fixe l'un des carreaux (7) respectif à une face interne (3a, 4a) du boîtier (2), le dispositif de fixation réversible comprenant :
un corps de support (13 ; 113) fixé sur une face externe (3b, 4b) du boîtier (2) et ayant au moins un siège de verrouillage (18 ; 118) et une ouverture (21 ; 121) pour avoir accès au siège de verrouillage (18 ; 118) depuis l'intérieur du boîtier (2) à travers une paroi (3, 4) du boîtier (2) ;
une bague filetée (12 ; 112 ; 212) pouvant être insérée à l'intérieur du siège de verrouillage (18 ; 118) afin de recevoir une vis (30 ; 130) à travers la paroi (3, 4) depuis l'intérieur du boîtier (2) ; et
au moins un élément de verrouillage (14 ; 114 ; 214) configuré pour verrouiller, de manière amovible, la bague (12 ; 112 ; 212) à l'intérieur du siège de verrouillage (18 ; 118) ;
**caractérisée en ce que** l'élément de verrouillage comprend une languette (14 ; 114 ; 214) s'étendant radialement à partir de la bague (12 ; 112 ; 212), et le siège de verrouillage (18 ; 118) a une partie morte communiquant avec l'ouverture (21 ; 121) et configurée pour recevoir et retenir axialement la languette (14 ; 114 ; 214) ; dans laquelle la bague (12 ; 112 ; 212) est angulairement mobile, à l'intérieur du siège de verrouillage (18 ; 118), entre une position d'insertion et d'extraction, dans laquelle la languette (14 ; 114; 214) est alignée avec l'ouverture (21 ; 121) et la bague (12 ; 112 ; 212) est axialement mobile, et une position de verrouillage, dans laquelle la languette (14 ; 114 ; 214) est retenue à l'intérieur de la partie morte du siège de verrouillage (18 ; 118).

2. Chambre de combustion selon la revendication 1, dans laquelle la bague (12 ; 112 ; 212) et le siège de verrouillage (18 ; 118) peuvent être raccordés par baïonnette.

3. Chambre de combustion selon l'une quelconque des revendications précédentes, dans laquelle la bague (12 ; 112 ; 212) a un filetage interne (12a) configuré de sorte que le fait de visser la vis (30 ; 130) à l'intérieur de la bague (12 ; 112 ; 212) amène la bague (12 ; 112 ; 212) à tourner de la position d'insertion et d'extraction à la position de verrouillage, et le fait de dévisser la vis (30 ; 130) amène la bague (12 ; 112 ; 212) à tourner de la position de verrouillage à la position d'insertion et d'extraction.

4. Chambre de combustion selon la revendication 3, dans laquelle la bague (12 ; 112 ; 212) comprend des éléments de couplage (12b ; 112b ; 212a, 212b) pour se coupler à un outil d'extraction (35 ; 235).

5. Chambre de combustion selon la revendication 4, dans laquelle les éléments de couplage (12b ; 112b ; 212a, 212b) sont configurés pour coupler la bague à l'outil d'extraction (35 ; 235) de sorte qu'il est possible, par le biais de l'outil d'extraction (35 ; 235), d'exercer une traction et un couple sur la bague (12 ; 112 ; 212) afin de faire tourner la bague (12 ; 112 ; 212) de la position de verrouillage vers la position d'insertion et d'extraction.

6. Chambre de combustion selon la revendication 4 ou 5, dans laquelle les éléments de couplage (12b ; 112b) comprennent un filetage externe (12b ; 112b) opposé au filetage interne (12a ; 112a).

7. Chambre de combustion selon la revendication 4, dans laquelle les éléments de couplage (212a, 212b) comprennent des guides longitudinaux (212a) sur une surface externe et des sièges de retenue (212b) s'étendant latéralement vers les guides longitudinaux (212a) et pouvant se mettre en prise grâce à des éléments de retenue (235a) correspondants de l'outil d'extraction (235) ; les sièges de retenue (212b) étant formés de sorte qu'une fois mis en prise, le coulissement axial de l'outil d'extraction (235) est verrouillé par rapport à la bague (212).

8. Chambre de combustion selon l'une quelconque des revendications précédentes, dans laquelle le siège de verrouillage (18) a des évidements (22) qui définissent la position de verrouillage de la bague (12) et ont un profil qui est complémentaire par rapport à la languette (14), de sorte que la rotation de la bague (12) est empêchée, une fois que la bague (12) est mise en traction au moyen de la vis (30).

9. Chambre de combustion selon l'une quelconque des revendications précédentes, dans laquelle le corps de support (13 ; 113) est en forme de coupelle, et la bague (12 ; 112 ; 212) logée à l'intérieur du corps de support (13 ; 113) est accessible par une bouche du corps de support (13 ; 113).

10. Chambre de combustion selon la revendication 9, comprenant un ensemble de rondelles Belleville (130) logées dans le corps de support (113), autour de la bague (112).

11. Chambre de combustion selon la revendication 9 ou 10, dans laquelle le corps de support (113) comprend une paroi inférieure dans laquelle un premier côté du siège de verrouillage (113) est défini ; et une plaque (116) où l'ouverture (121) et un second côté du siège de verrouillage (118) sont définis.

12. Chambre de combustion selon la revendication 10 ou 11, dans laquelle le corps de support (13) comprend un élément annulaire (15), dans lequel un premier côté du siège de verrouillage (18) et l'ouverture (21) sont définis, et un couvercle (16), dans lequel un second côté du siège de verrouillage (18 ; 118) est défini, le couvercle (16) fermant l'élément annulaire (15) sur le côté opposé au côté d'insertion de la bague (12).
